Europäisches Patentamt

European Patent Office

Office européen des brevets

(11) Publication number: **0 138 577**
**B1**

## EUROPEAN PATENT SPECIFICATION

(45) Date of publication of patent specification: **27.12.89**

(51) Int. Cl.⁴: **G 03 B 27/73,** G 03 C 5/02

(21) Application number: **84306937.8**

(22) Date of filing: **11.10.84**

(54) **Color print system.**

(30) Priority: **17.10.83 US 542720**

(43) Date of publication of application:
**24.04.85 Bulletin 85/17**

(45) Publication of the grant of the patent:
**27.12.89 Bulletin 89/52**

(84) Designated Contracting States:
**DE GB NL**

(56) References cited:
**CA-A- 969 400**
**GB-A-2 008 276**
**GB-A-2 102 978**
**US-A-3 737 224**
**US-A-4 087 174**
**US-A-4 167 327**

(73) Proprietor: **Rountree, Philip L.**
**P.O. Box 172 Brigham Road**
**Gates Miles Ohio 44040 (US)**

(72) Inventor: **Rountree, Philip L.**
**P.O. Box 172 Brigham Road**
**Gates Miles Ohio 44040 (US)**

(74) Representative: **Spall, Christopher John et al**
**BARKER, BRETTELL & DUNCAN 138 Hagley**
**Road**
**Edgbaston Birmingham B16 9PW (GB)**

## Description

### Technical field

The present invention relates to the field of calibrating photograph printing systems. The present invention eliminates the previously known trial and error procedure for establishing enlarger calibration settings. The product by process herein described will enable the photographer to use only one sheet of photography paper in establishing the enlarger calibration settings.

### Background art

In the past, establishing the correct calibration settings for photograph enlargers has been done on strictly a trial and error basis. The photographer would run a print, adjusting the exposure density of the photograph until he was satisfied. Then he would adjust the color filters, by trial and error, until he was satisfied with its color. This expended valuable time and numerous sheets of expensive photography paper. Previously, there was no known system or technique by which a photographer could set the exposure density and color filters for optimum printing without expending costly paper and valuable time.

### Summary of the invention

An object of the present invention is to allow the photographer to calibrate photograph enlargement settings using a single sheet of photography paper.

Another object of the present invention is to lower the cost in calibrating photograph enlargers.

Yet another object of the present invention is to eliminate the trial and error procedure for calibrating photograph enlargers.

Still another object of the present invention is to obtain high quality photograph enlargements from slide and/or negative film.

Also another object of the present invention is the generation of a color spectrum chart to assist in calibrating photograph printing systems.

The foregoing and other objects of the invention are achieved by a process for making color-balanced prints for a particular film material and a particular photography paper material, comprising the steps of:

placing a grey film of the particular film material in a color enlarger;

exposing photography paper of the particular material to light of a first color;

progressively and sequentially exposing first strips of said paper to decreasing amounts of light of a second color;

progressively and sequentially exposing second strips of said paper to decreasing amounts of light of a third color, said second strips being normal to said first strips;

developing said paper for obtaining therefrom a color matrix comprising a plurality of color elements; and

selecting a neutral grey element for color calibration of the enlarger.

### Brief description of the drawings

For a complete understanding of the objects, techniques, and structure of the invention, reference should be had to the following detailed description and accompanying drawings, wherein:

Fig. 1 is a top view of the photography paper received within a tray;

Fig. 2 is a top view of the photography paper with strips in vertical position;

Fig. 3 is a top view of the photography paper with strips in next incremental vertical position;

Fig 4 is a top view of the photography paper with strips in horizontal position;

Fig. 5 is a top view of the photography paper with strips in next incremental horizontal position.

Fig. 6 is a top view of a color spectrum photograph generated according to the concept of the invention;

Fig. 7 is a top view of the exposure chart of the invention; and

Fig. 8 is a top view of a trisector arrangement of photographs of Fig. 6, each based on a different one of the primary colors.

### Best mode for carrying out the invention

It is well known in the photography field that photograph enlargers contain various types of filter systems. Some of these filter systems change with time. The previous method of calibrating these filter systems was a trial and error procedure of adjusting and readjusting the filters until personal satisfaction was achieved.

Photography paper is labeled with an emulsion number and a designation for what is necessary to obtain white light correction. However, this labelling is only correct when the paper is manufactured. As the paper ages and encounters temperature changes, these determinations change, but these determinations can provide the photographer with an initial reference for practicing the present invention as will become apparent from the explanation hereinafter.

The known filter systems vary from type to type, and from enlarger to enlarger within the various types. Further, it is well known that these filter systems vary with respect to time from mechanical or electrical change as well as due to filters fading.

Also, it is well known that enlarger bulbs vary with time of use, in general becoming warmer in color.

Further, it is well known that the chemistry implicit in the photograph printing systems vary from batch to batch or from emulsion to emulsion, and each varies with respect to time; that is, printing paper, film, development chemicals, and so forth.

In addition, there are differences in processing techniques from one operator to another, for example, whether drain time is included in development times, whether agitation is performed uniformly, and so forth.

The previous method for accounting for all the sources of error was a trial and error procedure of adjusting and readjusting the time of exposure, enlarger stop opening (f-stop), and varying the filters until the approximate correct exposure was reached and then color balance achieved.

It is also known in panchromatic printing, as is acknowledged in US-A-4 087 174, to provide a mosaic filter in which cyan, magenta and yellow axes are positioned in three directions at angular intervals of 120° about zero as a centre, thus producing a combination of the primary colors system. One known way to correct an unbalance in the three primary colors in panchromatic printing has been to print a panchromatic negative film through this mosaic filter, then attempt to judge visually which position is to be considered most proper in the lattices of the positive film and then select a filter equivalent to that lattice.

Film varies slightly from roll to roll. Enlargers vary enormously between types and within types, but vary slowly with time for a particular enlarger. Development chemistry varies slightly from batch to batch, but varies enormously with time. Printing paper varies widely in manufacture and also changes drastically with time. Variations in the chemistry of undeveloped film, paper, and development solutions can be minimised by refrigeration, but the variations still exist.

Photography paper is labelled with an emulsion number. Color film is usually accompanied by suggested filter corrections and an exposure factor which has been found for a particular printing system at the paper manufacturer, but usually bears no resemblance to an individual enlarger system. Further, this labelling is only correct at the time of manufacture. As the paper ages and encounters temperature changes, these determinations change, but these determinations can provide the photographer with an initial reference for practicing the present invention as will become apparent from the explanation hereinafter.

Typical paper emulsions will specify a yellow correction from −10 points to +50 points, and magenta correction from −10 points to +50 points. Sometimes an exposure factor is given. These are so-called "white light corrections" given by the manufacturer.

Usually, most all photograph printing systems are designed so that the sensitivity to red light is deficient, thereby requiring that blue and green light components be diminished by yellow and magenta filtration, respectively, to obtain perfect color balance. Thus the operator must vary only two filters to obtain color balance. Rarely do green or blue deficiencies occur, but should they, they can be handled using the same procedure.

In the case of black and white printing paper, the exposure factor is often printed on the label.

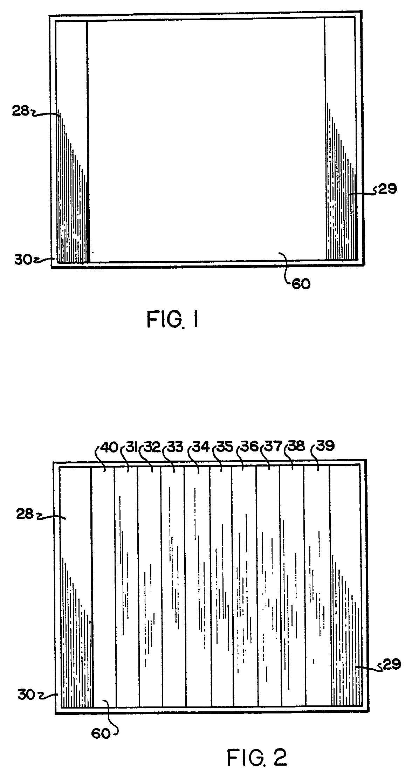

As shown in Fig. 1, there may be used a tray 30 with a depression sufficiently large to fit a sheet of printing paper 60. For the sake of example, we will use a 203mm × 254mm (8" × 10") piece of printing material, although any standard size piece of paper could be similarly accommodated. The photo tray 30 is of a rectangular design with its sides being 3.2mm to 25.4mm (1/8" to 1") in height, preferably 6.4mm to 19.1mm (1/4" to 3/4"). The photo paper 60 is laid face up in the tray 30 and the tray and paper are then placed under an enlarger. The enlarger is focused on this paper and set to a specified f-stop and exposure time.

A test negative or a slide is placed in the enlarger. This slide or negative will be color balanced, that is, a representation of a neutral image on a particular kind of film. An example would be a shot of an 18% grey card on VR-100 film. To be precise, this slide or negative should be from the same film the operator wishes to print, since film emulsions do vary from roll to roll. It is important that this slide negative be exposed with light of the same color temperature (daylight is 5800K).

The photo paper 60 is first exposed to red light only. This is accomplished by placing the cyan filter at zero and the magenta and yellow filters at their maximum settings. Exposure is made at a specified f-stop and time, for example, f5.6 for five seconds.

In perfect darkness, the strips 28 and 29 are placed vertically on the photo paper 60 at the extreme ends. For the 203mm × 254mm (8" × 10") example, these rectangular strips are 254mm (1") wide and 203mm (8") long. These strips form the border of a 203mm x 203mm (8" × 8") square. Opaque strips 31-39 are placed vertically on the photo paper 60 as shown in Fig. 2. The strips 31-39 are of a rectangular shape and vary in number from 5 to 50, preferably 5 to 10. The strips 31-39 cover between 80 to 95%, preferably 80 to 90%, of the photo paper 60, thus exposing only 5 to 20%, preferably 5 to 10%, of the photo paper. Thus there is vertical chute 40 left uncovered. The tray 30 is again placed under the enlarger with the strips in their vertical positions. The enlarger is set with red and green light completely filtered out (cyan and magenta filters are placed at maximum settings). Blue light is varied in specific intervals of 1 to 20 points of density through the anticipated range for 1 to 20 seconds, preferably 2 to 7 seconds, at an exposure setting (f-stop) from 2.8 to 11, preferably 4 to 8. The first exposure is made in chute 40, as shown in Fig. 2, at the lowest point of yellow filtration anticipated, for example, yellow filtration set at zero to 120, preferably from zero to 90.

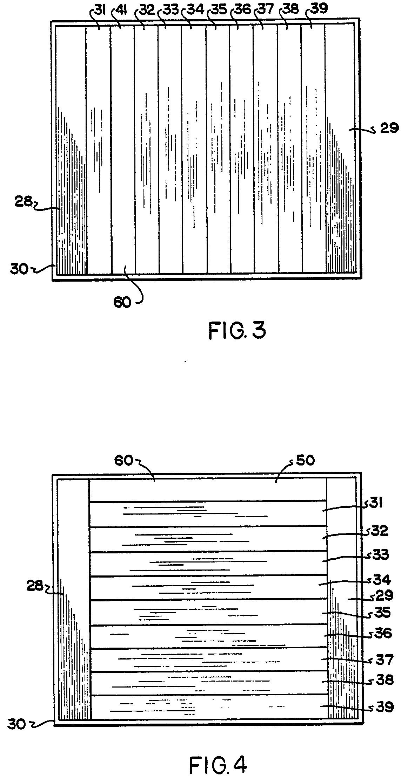

Next, the enlarger is deactivated. The first incremental vertical strip 31 is slid over sequentially one increment, thus covering chute 40 that had previously been exposed to blue light and uncovering the next immediate chute 41 for increased exposure, as shown in Fig. 3. The blue light setting is then decreased by an increment of 1 to 30 points of density, preferably 2-1/2 to 20, and then the enlarger is activated for the same period of time at the same f-stop. This process is repeated until all of the vertical chutes have been incrementally exposed to decreasing amounts of blue light, with the exposure of each successive chute being decreased over that of the previous chutes, sequentially across the paper.

In total darkness, the strips 31-39 are removed, leaving in place strips 28 and 29, and placed in the horizontal position of Fig. 4, leaving chute 50 uncovered. The tray 30 is placed under the enlarger with the strips 31-39 in their horizontal position as shown, exposing only the top chute 50. The enlarger is set with red and blue light completely filtered out, with the green light being free to vary over the anticipated range of values (cyan and yellow filters at maximum settings). The enlarger is activated and the chute 50 of the paper 60 is exposed to green light for the same time period at the same f-stop as before.

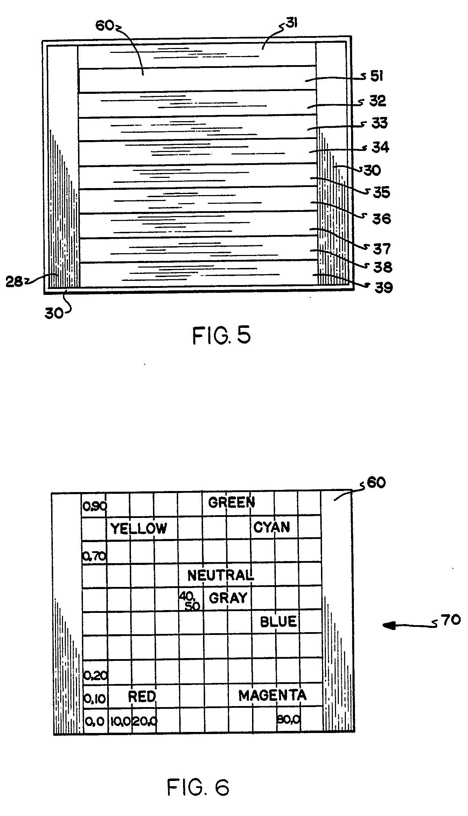

Next, the enlarger is deactivated. As shown in Fig. 5, the first incremental horizontal strip 31 is slid up sequentially one increment, thus covering the chute 50 that had previously been exposed to the first setting of green light and exposing the next horizontal chute 51. The green light setting is then decreased by an increment of 1 to 30 points of density, preferably 2-1/2 to 10 points, and then the enlarger is activated for the identical exposure time and f-stop as before. This repetitive process is continued until the entire paper 60 has been incrementally exposed to green light one horizontal chute at a time, and sequentially down the paper. The photo paper is removed from the tray, developed normally, and dried.

As depicted in Fig. 6, a photograph 70 is thus produced having 25 to 256, preferably 25 to 100, color squares. These squares vary in color and, in combination, create a color spectrum or matrix. Somewhere on the photograph 70 there should appear neutral color squares of varying shades. The nearest neutral square is used to calibrate the enlarger. Each square is labeled with its particular yellow filter correction and magenta filter correction incremental setting in a matrix form. Thus, the squares vary from (0,0) to (Y max; M max), according to the particular photo paper used, as seen in Fig. 6. As further shown, the matrix squares of the photograph 70 will vary over the color spectrum with distinct areas appearing for the primary colors and their complements, with blends therebetween. In the example given, neutral grey squares could appear, for example, at the square 40,50.

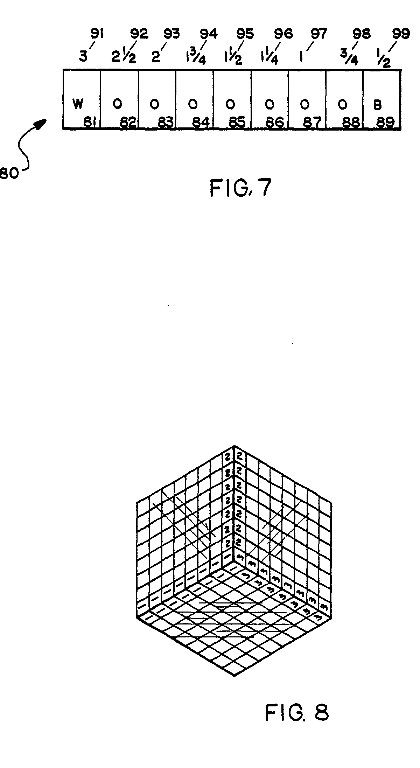

Fig. 7 is an exposure chart 80. It is divided into 5 to 15, preferably 7 to 12, equal spaces 81-89. Each space 81-89 has a corresponding exposure value 91-99 from 5 to 1/4, preferably 3-1/2 to 3/8. This exposure value is a function of f-stop and time, as is well known in the art. Each space varies in density with space 81 being white, space 89 being black, and the spaces 82-88 each being a different shade of grey. An exposure factor of 1.0 corresponds to an 18% grey shade and would indicate no exposure correction is required.

The photographer analyzes the photograph 70 and chooses one of the squares that he feels is the aesthetically best shade of grey. After this choice, he matches this grey, on the photograph 70, with one of the greys 82-88 of the exposure chart 80. Once he has found the color density that most nearly matches his selected square of the photograph 70, he has determined the filter settings and the exposure correction of the exposure used for the test negative. The exposure setting is ascertained from the particular grey chosen from the exposure chart 80. The red, blue, and green filter settings are ascertained from the labeled incremental setting on the color chart 70 which corresponds to the matching shade of grey.

Having thus obtained the integrated calibration for the enlarger, film, printing paper, development chemistry and other process variables inherent in operator habit or routine, these values can be set into an analyzer and used to print pictures using the film, paper, chemistry, and enlarger used in making the calibration.

The same procedure can be used to obtain a calibration using any properly exposed negative or slide coupled with a diffuser to mix the colors and hues. This method permits printing the pictures without an analyzer provided the negatives or slides are similar in density and color balance. Also, it is immaterial whether the blue is exposed first or the green. Choice of axis is optional.

Should there be a green deficiency in the photograph printing system, green would then be used for the full paper 60 exposure instead of the red, and red and blue would be varied in like manner to blue and green in the description above.

Using this process, a slide or negative can be produced for a given film type to give color and exposure correction values without the use of the mechanical tray of Fig. 1 or the strips 31-39. By determining the correction for a particular photograph system, for example, enlarger, film, paper type, and emulsion, the three color correction trisectors can be printed with the neutral color at the (0,0) origin. Three matrices result, one with red as the background and green and blue light varied over a selected spectrum, another with green light as the background and blue and red light varied over a selected spectrum, and thirdly, with a blue background varying red and green light over a selected spectrum. This can be done for either slide film or with negatives. After the process is finished, the three sheets are joined together in a trisector fashion, as can be seen in Fig. 8. The photographs are attached together by conventional means in such a way that each axis represents one of the complementary colors being used, that is, yellow, magenta, and cyan.

When this has been completed, the conical shape resulting from rounding the sides of the trisectors can be stood on end and photographed. The resulting slide or negative can be used as a single exposure calibration for the enlarger, paper, developer, film system. Variations from one roll of film to the next are not considered here and the error resulting therefrom is neglected for sake of speed in printing. The corrections can be read directly from the print in like manner as before.

The preceding examples illustrate in detail the process of the instant invention. It is understood that the example is for illustrative purposes only and does not limit the invention in any way.

Thus it can be seen that the objects of the invention have been satisfied by the structure and technique presented hereinabove. While in accordance with the patent statutes only the best mode and preferred embodiment of the invention have been presented and described in detail, it is to be understood that the invention is as set forth in the following claims.

## Claims

1. A process for making color-balanced prints for a particular film material and a particular photography paper material, comprising the steps of:
   placing a grey film of the particular film material in a color enlarger;
   exposing photography paper (60) of the particular material to light of a first color;
   progressively and sequentially exposing first strips (40, 41) of said paper (60) to decreasing amounts of light of a second color;
   progressively and sequentially exposing second strips (50, 51) of said paper (60) to decreasing amounts of light of a third color, said second strips (50, 51) being normal to said first strips (40, 41);
   developing said paper (60) for obtaining therefrom a color matrix (70) comprising a plurality of color elements; and
   selecting a neutral grey element for color calibration of the enlarger.

2. The process according to Claim 1 characterized in that each color element has associated therewith indications of light intensity levels to which said color element has been exposed.

3. The process according to Claim 2 characterized in that said indications are filter settings of said color enlarger.

4. The process according to any of Claims 1 to 3 characterized in that a grey level exposure chart (80) is compared against said color elements for selection of a neutral grey element for exposure calibration of the enlarger.

5. The process according to Claim 4 characterized by further including selecting color density and exposure settings from said neutral grey element.

6. The process according to Claim 1 characterized by further including the step of exposing and developing a second piece of photography paper in the manner set forth in Claim 1, but interchanging said first and second colors, and exposing and developing a third piece of photography paper in the manner set forth in Claim 1, but interchanging said first and third colors, obtaining three color matrices therefrom, and subsequently joining together said three color matrices in a trisector arrangement.

7. The process according to Claim 6 characterized by further including the step of photographing said trisector arrangement and generating a transparency therefrom.

## Patentansprüche

1. Verfahren zur Herstellung farbausgewogener Abzüge bei einem bestimmten Filmmaterial und einem bestimmten Fotopapiermaterial, umfassend die folgenden Schritte:
   es wird ein Graufilm des bestimmten Filmmaterials in einen Farbvergrößerer eingebracht;
   es wird ein Fotopapierblatt (60) des bestimmten Materials mit Licht einer ersten Farbe belichtet;
   es werden fortschreitend und nacheinander erste Streifen (40,41) des Fotopapierblatts (60) mit abnehmenden Lichtbeträgen einer zweiten Farbe belichtet;
   es werden fortschreitend und hintereinander zweite Streifen (50,51) des Fotopapierblatts (60) mit abnehmenden Beträgen einer dritten Farbe belichtet, wobei die zweiten Streifen (50,51) senkrecht zu den ersten Streifen (40,41) angeordnet sind;
   das Fotopapierblatt (60) wird entwickelt, um eine Farbmatrix (70) mit mehreren Farbelementen zu erhalten;
   und es wird ein Neutralgrau-Element für die Farbkalibrierung des Vergrößerers ausgewählt.

2. Verfahren nach Anspruch 1, dadurch gekennzeichnet, daß jedem Farbelement Angaben über das Lichtintensitätsniveau zugeordnet sind, dem das Farbelement ausgesetzt war.

3. Verfahren nach Anspruch 2, dadurch gekennzeichnet, daß die Angaben die Filtereinstellungen des Farbvergrösserers sind.

4. Verfahren nach einem der Ansprüche 1 bis 3, dadurch gekennzeichnet, daß eine Grauniveau-Belichtungskarte (80) mit den Farbelementen verglichen wird, um ein Neutralgrau-Element für die Belichtungskalibrierung des Vergrößerers auszuwählen.

5. Verfahren nach Anspruch 4, dadurch gekennzeichnet, daß die Einstellung der Farbdichte und der Belichtung anhand des Neutralgrau-Elements ausgewählt werden.

6. Verfahren nach Anspruch 1, dadurch gekennzeichnet, daß ein zweites Blatt des Fotopapiers entsprechend Anspruch 1 belichtet und entwickelt wird, wobei aber die ersten und zweiten Farben ausgetauscht werden, und daß ein drittes Blatt des Fotopapiers entsprechend Anspruch 1, belichtet und entwickelt wird, wobei aber die ersten und dritten Farben ausgetauscht werden, und daß daraus drei Farbmatrices erhalten werden, die sodann in einer Würfelanordnung zusammengefügt werden.

7. Verfahren nach Anspruch 6, dadurch gekennzeichnet, daß die Würfelanordnung fotografiert und danach ein Diapositiv hergestellt wird.

## Revendications

1. Procédé pour tirer des épreuves en couleurs équilibrées pour une pellicule particulière et un papier particulier, comprenant les phases consistant à:
   placer une pellicule grise, de la pellicule particulière dans un agrandisseur couleurs;

exposer un papier photographique (60) du matériau particulier à une lumière d'une première couleur;

exposer progressivement et séquentiellement des premières bandes (40, 41) dudit papier (60) à des quantités décroissantes d'une lumière d'une seconde couleur;

exposer progressivement et séquentiellement des secondes bandes (50, 51) dudit papier à des quantités décroissantes d'une lumière d'une troisième couleur, lesdites secondes bandes (50, 51) étant perpendiculaires auxdites premières bandes (40, 41);

développer ledit papier (60) pour en obtenir une matrice-couleur (70) constituée d'une pluralité d'éléments de couleurs;

choisir un élément gris neutre pour étalonner l'agrandisseur.

2. Procédé suivant la revendication 1, caractérisé en ce que chaque élément de couleur comporte, en association, des indications des niveaux des intensités de lumière auxquelles a été exposé ledit élément de couleur.

3. Procédé suivant la revendication 2, caractérisé en ce que lesdites indications sont les réglages de filtre dudit agrandisseur couleurs.

4. Procédé suivant l'une quelconque des revendications 1 à 3, caractérisé en ce qu'on compare un tableau (80) des valeurs d'exposition de gris auxdits éléments de couleur pour choisir un élément gris neutre pour l'étalonnage d'exposition de l'agrandisseur.

5. Procédé suivant la revendication 4, caractérisé en ce qu'il comprend en outre le choix des réglages de densité de couleur et d'exposition à partir dudit élément gris neutre.

6. Procédé suivant la revendication 1, caractérisé en ce qu'il comprend en outre la phase d'exposition et de développement d'un second morceau de papier photographique de la façon décrite à la revendication 1, mais en intervertissant lesdites première et seconde couleurs, et on expose et on développe un troisième morceau de papier photographique de la façon décrite à la revendication 1, mais en intervertissant lesdites première et troisième couleurs, et on en obtient trois matrices couleurs, et on réunit ensuite ensemble lesdites trois matrices couleurs en un agencement trisecteur.

7. Procédé suivant la revendication 6, caractérisé en ce qu'il comprend en outre la phase consistant à photographier ledit agencement trisecteur et à en produire une diapositive.

FIG. 1

FIG. 2

31 41 32 33 34 35 36 37 38 39

29

28

30

60

FIG. 3

60 50

31

32

33

34

29

35

36

37

38

28

39

30

FIG. 4

2

EP 0 138 577 B1

FIG. 5

FIG. 6

3

91  92  93  94  95  96  97  98  99

3   2½  2   1¾  1½  1¼  1   ¾   ½

| W | O | O | O | O | O | O | O | B |
|---|---|---|---|---|---|---|---|---|
| 81 | 82 | 83 | 84 | 85 | 86 | 87 | 88 | 89 |

80

FIG. 7

FIG. 8